# EUROPEAN PATENT APPLICATION

(11) **EP 1 601 176 A2**
(43) Date of publication of application: **30.11.2005**
(21) Application number: 05011239.0
(22) Date of filing: 24.05.2005
(51) Int. Cl.: H04N 1/00

(54) **Multi-function device and method for controlling the device**

(30) Priority: 27.05.2004 KR 2004037829
(71) Applicant: SAMSUNG ELECTRONICS CO., LTD., Suwon-si, Gyeonggi-do (KR)
(72) Inventor: Lee, Jae-Hoe, Suwon-si Gyeonggi-do (KR); Kim, Hark-Sang, Suwon-si Gyeonggi-do (KR); Choi, Do-Hwan, Suwon-si Gyeonggi-do (KR); Ryu, Yeong-Moo, Suwon-si Gyeonggi-do (KR)
(74) Representative: Lang, Johannes

(57) **Abstract**

Disclosed is a multi-function portable device having a portable home theater for outputting an MPEG layer 3 (MP3) file, photographing video data, performing a remocon function, receiving television (TV) video data, transmitting and receiving data to and from, respectively, a mobile terminal and a personal computer (PC), performing an alarm function, performing an Frequency modulation (FM) transmission/reception function for transmitting data of the portable home theater to an external device and for receiving data from the external device, being provided with power from a cradle of the portable home theater, and transmitting data to the cradle of the portable home theater. The cradle of the portable home theater provides power to the portable home theater and outputs data received from the portable home theater.

## Description

### PRIORITY

This application claims the benefit under 35 U.S.C §119(a) to an application entitled "Multi-Function Device and Method for Controlling The Device" filed in the Korean Intellectual Property Office on May 27, 2004 and assigned Serial No. 2004-37829, the entire contents of which are incorporated herein by reference.

### BACKGROUND OF THE INVENTION

### 1. Field of the Invention

The present invention relates to a multi-function device and a method for controlling the same. More particularly, the present invention relates to a multi-function device having various functions and a method for controlling the device.

### 2. Description of the Related Art

Recently, mobile terminals have been developed to have a high-speed data transmission function in addition to a voice communication function. That is, IMT-2000 mobile communication network services enable mobile terminals to perform high-speed data communication as well as voice communication. The mobile terminals performing the data communication may process packet data and video data. Also, mobile terminals equipped with a camera or a TV receiver can display moving pictures. A mobile terminal with an embedded camera can photograph images, display them as moving or still pictures, and also send the images to another mobile terminal.

As described above, a mobile terminal equipped with a camera has a function for photographing moving and still pictures, and a mobile terminal equipped with a TV receiver has a function for receiving TV video data and enabling the user to view TV programs. Also, a mobile terminal with an MP3 function has a function capable of outputting an MP3 file.

However, a mobile terminal having such additional functions as described above is very expensive; however, it is inevitable that users will buy such an expensive mobile terminal, instead of the conventional mobile terminal having only the communication function, in order to use the above-mentioned additional functions.

### SUMMARY OF THE INVENTION

Accordingly, the present invention has been made to solve the above-mentioned problems occurring in the prior art, and an object of the present invention is to provide a multi-function device having various functions and a method for controlling the multi-function device.

To accomplish this object, in accordance with one aspect of the present invention, there is provided a multi-function portable device comprising: a portable home theater having speakers or earphones for outputting an MPEG layer 3 (MP3) file, a camera for photographing and processing still and video data, a remote control unit for performing a remote control (hereinafter "remocon") function, a television reception unit for receiving television (TV) video data, a transmitting and receiving means for transmitting and receiving data to and from, respectively, a mobile terminal and a personal computer (PC), a control unit for performing an alarm function, frequency modulation (FM) transmission and reception units for performing FM transmission and reception functions for transmitting and receiving data for the portable home theater to and from an external device. The portable home theater is capable of being provided with power from a cradle of the portable home theater, and transmitting data to the cradle of the portable home theater; and outputting data received from the portable home theater.

In accordance with another aspect of the present invention, there is provided a method for performing multiple functions in a multi-function device which includes a portable home theater and a cradle of the portable home theater, the method comprising the steps of displaying the kinds of functions of the portable home theater when a menu is selected in the portable home theater; performing an MP3 function when the MP3 function of the functions is selected; performing a camera function when the camera function is selected from the kinds of functions; performing a remocon function for controlling an external device when the remocon function of the functions is selected; performing a TV video data reception function when the TV reception function of the functions is selected; and performing an alarm function when the alarm function of the functions is selected.

### BRIEF DESCRIPTION OF THE DRAWINGS

The above and other objects, features and advantages of the present invention will be more apparent from the following detailed description taken in conjunction with the accompanying drawings, in which:
FIG. 1 is a view illustrating a multi-function device comprising a portable home theater and a cradle for the portable home theater according to an embodiment of the present invention;
FIG. 2 is a block diagram illustrating an exemplary construction of the portable home theater shown in FIG. 1;
FIG. 3 is a block diagram illustrating an exemplary construction of the cradle of the portable home theater shown in FIG. 1;
FIG. 4 is a flowchart illustrating a method for performing multiple functions in the portable home theater according to an embodiment of the present invention; and
FIG. 5 is a flowchart illustrating a method for providing power and data output through the cradle of the portable home theater according to an embodiment of the present invention.

Throughout the drawings, it should be understood that like reference numerals refer to like features, structures and elements.

### DETAILED DESCRIPTION OF EXEMPLARY EMBODIMENTS

An embodiment according to the present invention will now be described with reference to the accompanying drawings. In the following description of the present invention, a detailed description of known functions and configurations incorporated herein will be omitted for the sake of clarity and conciseness.

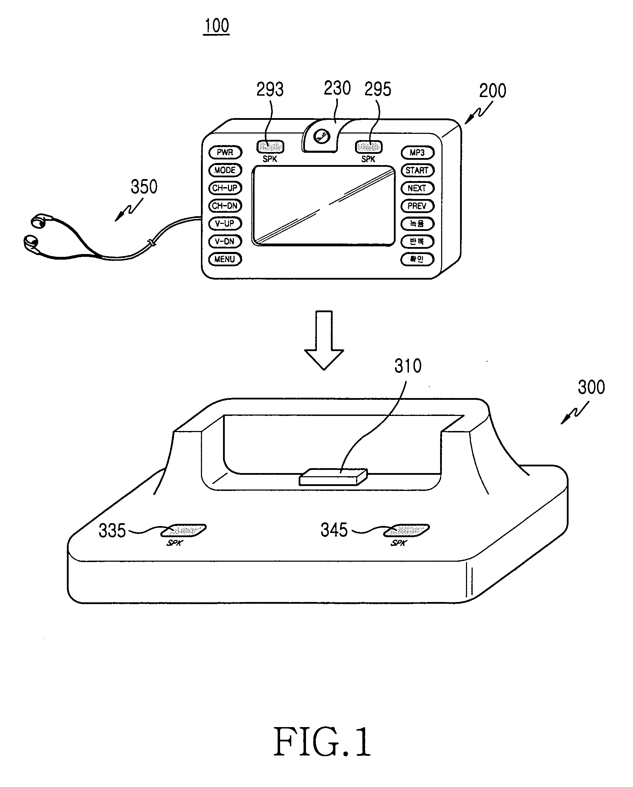

FIG. 1 is a view illustrating a multi-function device comprising a portable home theater and a cradle for the portable home theater according to an embodiment of the present invention.

The multi-function device 100 comprises a portable home theater (PHT) 200 and a cradle 300 into which the PHT 200 is inserted for charging and for performing other functions. The PHT 200 has various functions such as an MP3 function, a camera function, a remocon function and a TV receiving function. The cradle 300 is connected with an external power source and provides the PHT 200 with the power of the external power source when the PHT 200 is inserted into the cradle 300. When the PHT 200 receives audio data while being inserted into the cradle 300 to be charged, the received audio data is output through a speaker of the cradle 300.

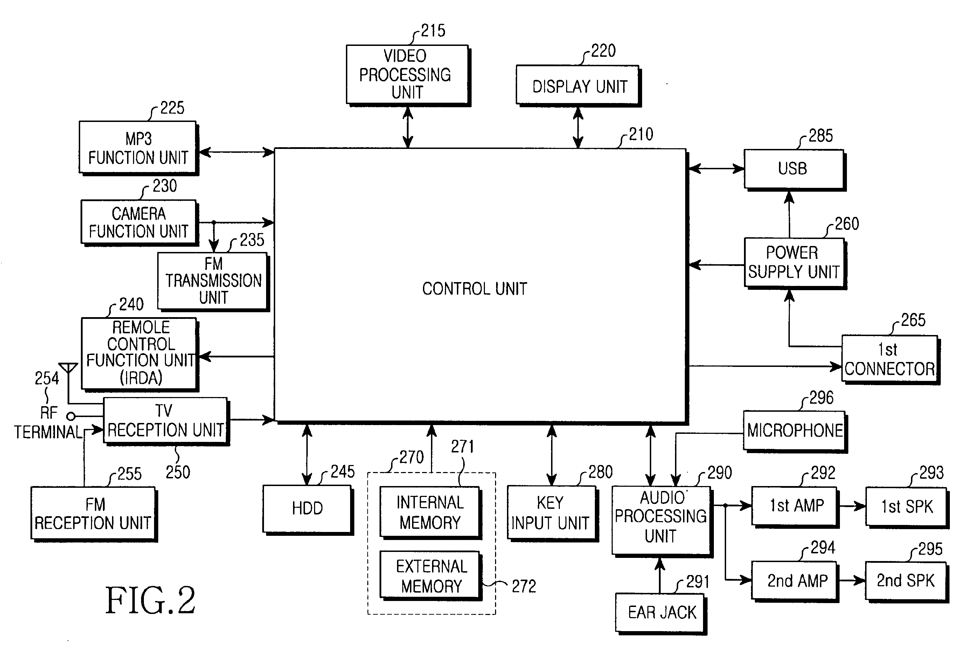

FIG. 2 is a block diagram illustrating a construction of the PHT 200. The construction of the PHT 200 will be described in detail with reference to FIG. 2. An MP3 function unit 225 comprises a decoder and a D/A converter. Under the control of a control unit 210, the decoder decodes an MP3 file stored in a hard disk drive (HDD) 245 and an external memory 272, and the D/A converter converts an MP3 file of a digital audio signal type decoded by the decoder into an analog audio signal and outputs the analog audio signal.

A camera function unit 230 comprises a camera module, a video processing unit and a flash LED. The camera module comprises a camera sensor and a signal processing section. The camera sensor photographs an image and converts a light signal obtained by taking the photograph into an electric signal. The signal processing section converts an analog video signal obtained through the camera sensor into digital data. Herein, it is assumed that the camera sensor is preferably a CCD sensor, and the signal processing section can preferably be realized by a digital signal processor (DSP). Also, the camera sensor and the signal processing section may be integrally or separately constructed. The video processing unit 215 performs the function of generating screen data for displaying a video signal output from the camera module. The video processing unit 215 processes a video signal, which is output from the camera module, in frame units, and outputs the frame video data according to the size and the property of a display unit 220. Also, the video processing unit 215 comprises a video CODEC so as to perform the function of compressing frame video data displayed on the display unit 220 by using a predetermined scheme and the function of reproducing original frame video data from compressed frame video data. Herein, the video CODEC may be one of a JPEG CODEC, an MPEG4 CODEC, a Wavelet CODEC, or the like. It is assumed that the video processing unit has an On Screen Display (OSD) function and can output OSD data according to the size of a display screen under the control of a control unit 210. Also, the camera function unit 230 may output video data, which have been obtained by photographing, to an external device through an FM transmission unit 235.

A remocon function unit 240 functions to control an external device through a wireless communication module included in the PHT 200. Embodiments of the present invention are described on the assumption that the wireless communication module included in the PHT 200 is an IrDA unit.

A TV reception unit 250 comprises a tuner, a decoder and a video processing section. The tuner functions to receive a television video signal of a channel selected according to the control of the control unit 210 and to change the frequency of the received television video signal. The decoder functions to demodulate and decode a television video signal output from the tuner. The decoder decodes the television video signal to output color signals (R, G and B) and synchronizing signals (a horizontal synchronizing signal and a vertical synchronizing signal). The video processing section performs data communication with the control unit 210, and performs a signal processing function for displaying a television video signal output from the decoder under the control of the control unit 210. That is, the video processing section functions to process a video signal output from the decoder and to output the video signal to a corresponding region in the display unit 220. Also, the tuner can receive not only a television video signal of a channel (which is selected under the control of the control unit 210) through an antenna, but also a television video signal through an RF terminal 254 connected to an external device. In addition, the tuner may receive a television video signal from the external device through the FM reception unit 255.

An FM transmission unit 235 frequency-converts a video signal and an audio signal into a specific frequency channel (a frequency channel which is not employed by any public broadcasting from among frequency channels of 88.1 to 108 MHz) set by the user and outputs the converted signals. Herein, in order to view a video signal and a television signal output through the FM transmission unit 235 with an external device, it must be premised that the FM radio frequency of the external device has been preset as the same frequency as the specific frequency of the FM transmission unit 235 set by the user.

A FM reception unit 255 receives a video signal and an audio signal, which are frequency-converted into a specific frequency channel (a frequency channel which is not employed by any public broadcasting from among frequency channels of 88.1 to 108 MHz) set by the user, from an external device. Herein, in order to view a video signal and an audio signal received through the FM reception unit 255 with the PHT 200, it must be premised that the FM radio frequency of the PHT 200 has been preset as the same frequency as a specific frequency of the external device set by a user.

A Universal Serial Bus (USB) unit 285 is connected to a mobile terminal and/or a PC. When the USB unit 285 is connected to the mobile terminal and the PC, the PHT 200 can transmit and receive data to and from, respectively, the mobile terminal and the PC through the USB unit 285. Also, when the USB unit 285 is connected to the mobile terminal and the PC, the PHT 200 may function as a master device while the mobile terminal and the PC function as slave devices. In addition, the PHT 200 can transmit and receive data to and from the mobile terminal by wireless communication means, such as the remocon function unit or IrDA unit.

A first connector 265 contacts with a second connector of the cradle 300 when the PHT 200 is inserted into the cradle 300. While the first connector 265 contacts with the second connector of the cradle 300, the first connector 265 receives power provided through the cradle 300 and outputs the received power to a power supply unit 260. Also, the first connector 265 transmits data, which is received under the control of the control unit 210, to the cradle 300.

The power supply unit 260 stores power provided through the first connector 265 and supplies power required to perform all of the operations of the PHT 200.

The hard disk drive (HDD) 245 stores data for the PHT 200, such as an MP3 file, television video data, still picture, moving picture, or other data.

A memory 270 comprises an internal memory 271 and an external memory 272. The internal memory 272 preferably comprises a program memory and a data memory. The program memory may store programs for controlling the general operation of the PHT 200. The data memory temporarily stores data generated while the programs are being executed. The external memory 272 has a structure which can be accommodated in or withdrawn from the PHT 200. The external memory 272 may store the various content (such as, a video game, an MP file, or the like) to be provided to the PHT 200. Also, the external memory 272 (which can be accommodated in or withdrawn from the PHT 200) enables data of the PHT 200 to be provided to the mobile terminal and the PC and enables data stored in a mobile terminal and or a PC to be provided to the PHT 200.

The control unit 210 controls all of the operations of the PHT 200. The control unit 210 controls an MP3 function to be performed in an MP3 function mode according to an embodiment of the present invention. Also, the control unit 210 controls an external device according to operations of the key input unit 280 in a remocon function mode according to an embodiment of the present invention. Also, the control unit 210 controls the performance of the camera function in a camera function mode according to an embodiment of the present invention. Also, the control unit 210 controls the reception of television video data in a TV reception mode according to an embodiment of the present invention. In addition, under the control of the control unit 210, data of the PHT 200 are transmitted to an external device or data from the external device is received by the PHT 200 in an FM transmission/reception mode according to an embodiment of the present invention.

The display unit 220 can employ an LCD. When the LCD is employed, the display unit 220 can include an LCD controller, a memory for storing video data, an LCD display element, and other well-known LCD support components. Herein, when the LCD is realized in a touch screen scheme, the display unit 220 may operate as an input section. According to an embodiment of the present invention, the display unit 220 displays a video signal output from the camera function unit 230 on its screen. Also, according to an embodiment of the present invention, the display unit 220 displays a television video signal output from the TV reception unit 250 on its screen.

A key input unit 280 comprises function keys used for setting functions contained in the PHT 200 and keys used for performing functions in the set function modes.

An audio processing unit 290 comprises an audio codec for processing audio signals such as voice. The audio processing unit 290 receives an audio signal (which is output from the control unit 210) either to be reproduced through first and second speakers 293 and 295 after being amplified by first and second amplifiers 292 and 294 or to be reproduced through an earphone 350 connected with an ear jack 291. In addition, the audio processing unit 290 functions to transmit an audio signal, which is generated from a microphone 296, to the control unit 210.

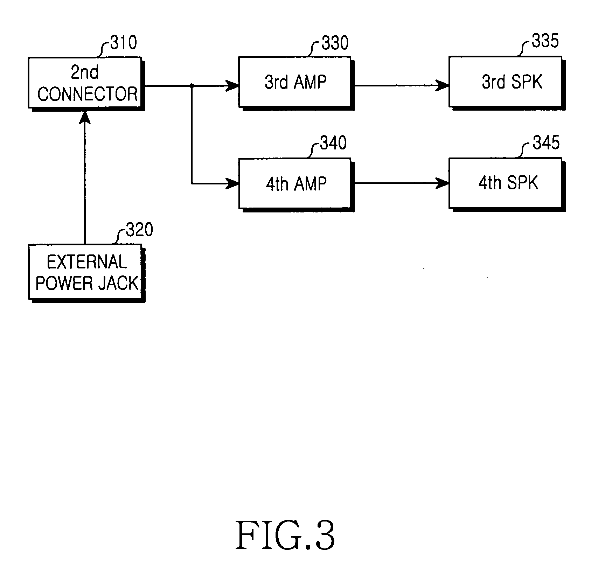

FIG. 3 is a block diagram illustrating an exemplary construction of the cradle 300 according to an embodiment of the present invention. The construction of the cradle 300 will now be described in more detail with reference to FIG. 3. The second connector 310 contacts the first connector 265 of the PHT 200 when the PHT 200 is inserted into the cradle 300. When the second connector 310 contacts the first connector 265 of the PHT 200, the second connector 310 provides power (which is input through an external power jack) to the PHT 200 through the first connector 265. When the cradle 300 receives audio data through the second connector 310 from the PHT 200, the cradle 300 amplifies the received audio data using third and fourth amplifiers 330 and 340 and then reproduces the amplified audio data through third and fourth speakers 335 and 345. The external power jack 320 is connected to an external power supply to supply power to the PHT 200 when inserted into the cradle 300.

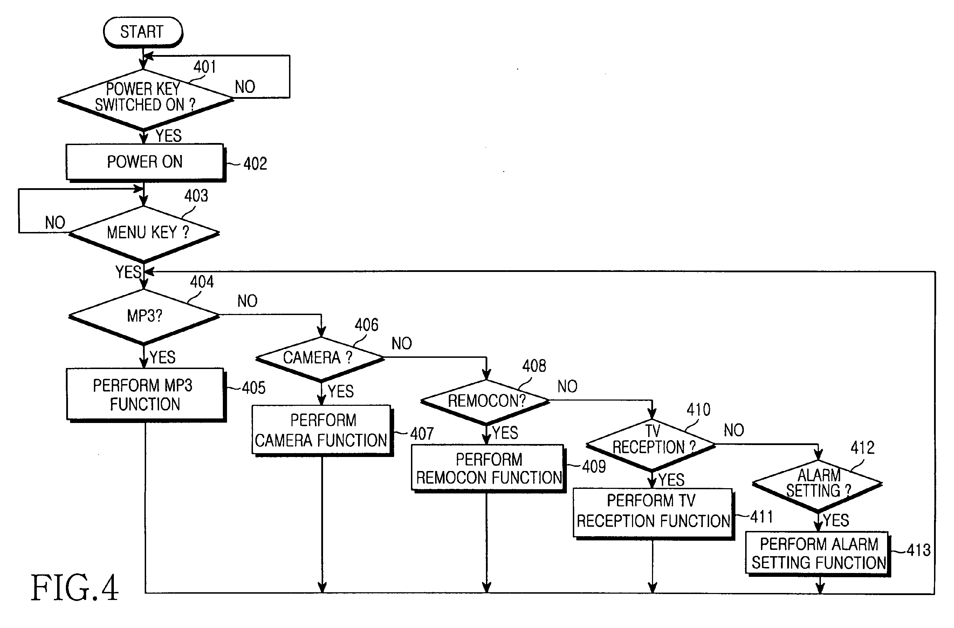

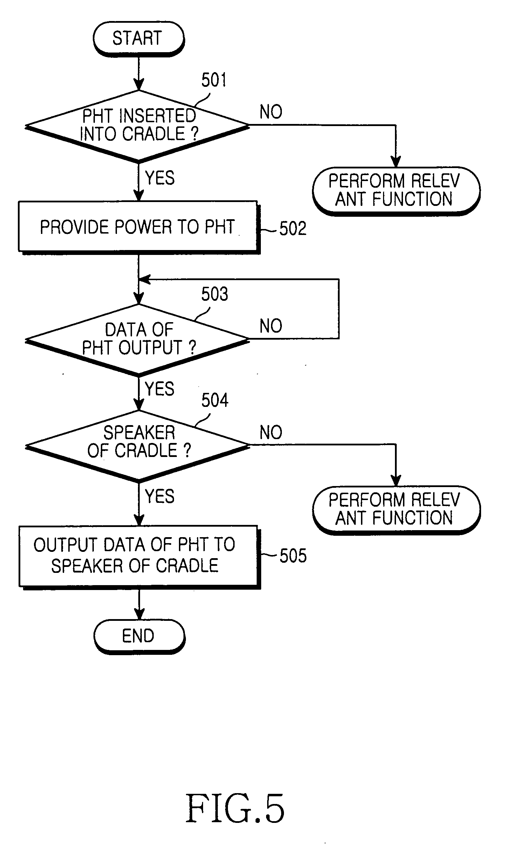

Hereinafter, the operations for performing the various additional functions of the multi-function device 100 comprising the above-mentioned PHT 200 and cradle 300 will be described in detail with reference to FIGs. 4 and 5.

FIG. 4 is a flowchart illustrating a procedure for performing multiple functions in the PHT according to an embodiment of the present invention, and FIG. 5 is a flowchart illustrating a procedure for power provision and data output through the cradle of the PHT according to an embodiment of the present invention.

Hereinafter, the embodiments shown in FIGs. 4 and 5 will now be described with reference to FIGs. 1 to 3.

Referring to FIG. 4, when the user turns on a power key (not shown) in or on the key input unit 280 of the PHT 200, the control unit 210 detects it in step 401 and powers on the PHT 200 in step 402. In step 402 in which the PHT 200 is powered on, state information (such as, date and time information, battery information, and other state information) of the PHT 200 may be displayed on the display unit 220. When the user presses a menu key (not shown) in of on the key input unit 280, the control unit 210 detects it in step 403 and controls the display unit 220 to display the kinds of functions included in the PHT 200. When an MP3 function is selected from among the multiple kinds of functions performed by the PHT 200, the control unit 210 detects it in step 404 and proceeds to step 405 for performing the MP3 function. In step 405, when the user selects an MP3 file (which the user desires to hear or access), the control unit 210 outputs the selected MP3 file from the hard disk drive 245 or the external memory 272. In this case, the control unit 210 controls the MP3 function unit 225 so that the MP3 file output from the hard disk drive 245 or the external memory 272 is decoded and converted to an analog signal. The MP3 file converted into the analog signal is output through the audio processing unit 290 to the first and second speakers 293 and 295 under the control of the control unit 210, thereby being reproduced. When the earphone 350 is connected with the ear jack 291, the MP3 file converted into the analog signal is output via the ear jack 291 and reproduced through the earphone 350.

Meanwhile, when the camera function is selected from among the multiple kinds of functions performed by the PHT 200, the control unit 210 detects it in step 406 and proceeds to step 407 of performing the camera function. In step 407, the user can photograph a still picture or a moving picture by the camera function unit 230, and video or still data of the photographed picture can be stored in the hard disk drive 245 and/or the external memory 272. Also, the video data obtained through the photographing can be transmitted to an external device through the FM transmission unit 235. In step 407, when a video data stored in the hard disk drive 245 or the external memory 272 is selected, the control unit 210 controls the camera function unit 230 so that the selected video data is displayed on the display unit 220. Also, when the selected video data includes an audio signal, the control unit 210 controls the PHT 200 such that the audio signal is output through the audio processing unit 290 to the first and second speakers 293 and 295 for reproduction.

When the earphone 350 is connected with the ear jack 291, the audio signal is output via ear jack 291 and reproduced through the earphone 350.

Meanwhile, when a remocon function is selected from among the multiple kinds of functions performed by the PHT 200, the control unit 210 detects it in step 408 and proceeds to step 409 of performing the remocon function. In step 409, the user can select the kind of external device to be remotely controlled by the PHT 200 and can remotely control the selected external device preferably through the remocon function unit comprising the IrDA unit of the PHT 200.

Also, when a television reception function is selected from among the multiple kinds of functions performed by the PHT 200, the control unit 210 detects it in step 410 and proceeds to step 411 for performing the television reception function. In step 411, when the user selects a channel, the control unit 210 receives television video data of the selected channel through the television reception unit 250 and displays the received television video data on the display unit 220. When the television video data includes an audio signal, the control unit 210 controls such that the television audio signal is output through the audio processing unit 290 to the first and second speakers 293 and 295 for reproduction. When the earphone 350 is connected with the ear jack 291, the television audio signal is output via ear jack 291 and reproduced through the earphone 350. In addition, the received television video data can be stored in the hard disk drive 245 and the stored television video data can be viewed according to the selection of the user.

Meanwhile, when an alarm setting function is selected from among the multiple kinds of functions performed by the PHT 200, the control unit 210 detects it in step 412 and proceeds to step 413 for performing the alarm setting function. In step 413, the user can set a selected alarm to sound at a time of the user's choice. When the set time is reached, the control unit 210 signals the set alarm to sound. In addition, the PHT 200 comprises a recording function.

Referring to FIG. 5, when the PHT 200 is inserted into the cradle 300, the control unit 210 detects it in step 501 and proceeds to step 502. In step 502, the control unit 210 outputs control signals such that power (which is input though the external power jack 320) is provided to the PHT 200 through the first connector 265 of the PHT 200, which contacts with the second connector 310 of the cradle 300. That is, the control unit 210 outputs control signals such that the power provided through the first connector 265 is supplied to the power supply unit 260 so as to charge power supply unit 260. In addition, in a state in which the PHT 200 is inserted into the cradle 300, the user selects the output of an audio signal (such as an MP3 file, an audio signal of a moving picture, video and a television audio signal) of the PHT 200, the control unit 210 detects it in step 503 and outputs the selected audio signal. In this case, when the user selects the audio signal to be output to the speakers 335 and 345 comprised in the cradle 300, the control unit 210 detects it in step 504 and proceeds to step 505. In step 505, the control unit 210 controls the audio signal (which is output from the PHT 200) to be amplified by the third and fourth amplifiers 330 and 340 and then to be reproduced through the third and fourth speakers 335 and 345.

The PHT 200 according to an embodiment of the present invention can include not only the MP3 function unit, the camera function unit, the remocon function unit, the TV reception unit and the FM transmission/reception unit for additional functions, but also units for different additional functions, particularly an RF unit to perform a wireless communication function.

As described above, embodiments of the present invention provide a multi-function device that the user can use for various additional functions just by carrying the multi-function device. In addition, the user having used the conventional mobile terminal having only a communication function can enjoy various functions by carrying the multi-function device.

While the embodiments of the present invention has been shown and described with reference to certain preferred embodiments thereof, it will be understood by those skilled in the art that various changes in form and details may be made therein without departing from the spirit and scope of the invention as defined by the appended claims. Accordingly, the scope of the invention is not to be limited by the above embodiments but by the claims and the equivalents thereof.

## Claims

1. A multi-function portable device comprising:
a portable home theater for outputting an MPEG layer 3 (MP3) file, photographing video data, performing a remocon function, receiving television (TV) video data, transmitting and receiving data to and from, respectively, a mobile terminal and a personal computer (PC), performing an alarm function, performing an frequency modulation (FM) transmission/reception function for transmitting data of the portable home theater to an external device and for receiving data from the external device, receiving power from a cradle of the portable home theater, and transmitting data to the cradle of the portable home theater; and the cradle of the portable home theater for providing power to the portable home theater and outputting data received from the portable home theater.

2. The multi-function portable device as claimed in claim 1, wherein the portable home theater comprises:
an MP3 function unit for decoding and outputting an MP3 file;
a camera function unit for photographing and outputting video data;
a remocon function unit for performing a remocon function to control an external device;
a TV reception unit for receiving and transmitting TV video data;
an FM transmission/reception unit comprising an FM transmission unit and an FM reception unit, the FM transmission unit transmitting data of the portable home theater to an external device, the FM reception unit receiving data of the external device;
a universal serial bus (USB) unit connected to the mobile terminal and the PC to transmit and receive data;
a first connector connected with the cradle of the portable home theater to receive power and transmit data to the cradle of the portable home theater; and
a control unit for controlling all of the functions of the portable home theater, receiving power from the cradle when the portable home theater is connected to the cradle in order to charge the portable home theater, and transmitting data to the cradle of the portable home theater in order to allow the cradle to output the data.

3. The multi-function portable device as claimed in claim 2, wherein the portable home theater transmits and receives data to and from, respectively, the mobile terminal by wireless communication.

4. The multi-function portable device as claimed in claim 2, wherein the TV reception unit receives TV video data through the FM reception unit, an RF terminal connected to an external device and an antenna, and transmits the received TV video data.

5. The multi-function portable device as claimed in claim 1, wherein the portable home theater further comprises:
a hard disk drive (HDD) for storing data of the portable home theater;
a memory comprises an internal memory and an external memory, the internal memory being included in the portable home theater, the external memory being adapted to be in and withdrawn from the portable home theater;
a key input unit comprising function keys for setting and performing the functions of the portable home theater;
a display unit for displaying data of the portable home theater;
an ear jack for outputting data of the portable home theater to an earphone when the earphone is connected to the ear jack; and
at least one speaker for outputting data of the portable home theater.

6. The multi-function portable device as claimed in claim 1, wherein the cradle of the portable home theater comprises:
a second connector for providing power to the portable home theater and receiving data from the portable home theater;
at least one speaker for outputting data received through the second connector; and
an external power jack connected to an external power supply.

7. A method for performing multiple functions in a multi-function device comprising a portable home theater and a cradle of the portable home theater, the method comprising the steps of:
displaying a plurality of the functions of the portable home theater when a menu is selected in the portable home theater;
performing an MP3 function when the MP3 function of the displayed functions is selected;
performing a camera function when the camera function of the displayed functions is selected;
performing a remocon function for controlling an external device when the remocon function of the displayed functions is selected;
performing a TV video data reception function when the TV reception function of the displayed functions is selected; and
performing an alarm function when the alarm function of the displayed functions is selected.

8. The method as claimed in claim 7, further comprising the steps of:
receiving power from the cradle and charging when the portable home theater is inserted into the cradle of the portable home theater; and
outputting data through the cradle when the portable home theater transmits the data to the cradle.
